# EUROPEAN PATENT APPLICATION

(11) **EP 4 570 113 A1**
(43) Date of publication of application: **18.06.2025**
(21) Application number: 23851732.0
(22) Date of filing: 04.08.2023
(51) Int. Cl.: A44B 19/26, A44B 19/24, A44B 19/04

(54) **ZIPPER STRUCTURE FOR SEAT SLIDE RAIL**

(30) Priority: 10.08.2022 CN 202210956278; 10.08.2022 CN 202222098253 U; 10.08.2022 CN 202222100256 U
(71) Applicant: Faurecia (Wuxi) Seating Components Co., Ltd, Wuxi, Jiangsu 214028 (CN)
(72) Inventor: LIU, Dongwei, Wuxi, Jiangsu 214028 (CN); WANG, Yayun, Wuxi, Jiangsu 214028 (CN); ZHOU, Linming, Wuxi, Jiangsu 214028 (CN); TAO, Ping, Wuxi, Jiangsu 214028 (CN); LI, Hui, Wuxi, Jiangsu 214028 (CN); TANG, Yaxi, Wuxi, Jiangsu 214028 (CN); CAI, Ji, Wuxi, Jiangsu 214028 (CN); WANG, Haibo, Wuxi, Jiangsu 214028 (CN)
(74) Representative: Pfenning, Meinig & Partner mbB
(86) International application number: PCT/CN2023/111311
(87) International publication number: WO 2024/032511

(57) **Abstract**

A zipper structure for a seat slide rail capable of preventing foreign matters comprises an upper rail and a lower rail; the upper rail and the lower rail are in sliding fit; zipper heads movably connected to the upper rail are respectively arranged at the two ends of the upper rail; two sets of dustproof rubber covers are fixedly arranged at the upper end of the lower rail; the two sets of dustproof rubber covers are respectively arranged on the two sides of the lower rail; a sewn elastic cloth is arranged between the dustproof rubber covers and the lower rail; one side of the sewn elastic cloth is fixedly connected to the dustproof rubber covers, and zipper racks are arranged on the other side of the sewn elastic cloth; the two sets of zipper racks are respectively communicated with the zipper heads; and when the zipper heads slide, the two sets of zipper racks are meshed with each other or separated from each other.

## Description

### Field

The present disclosure relates to a zipper structure for seat slide rail.

### Background

The current seat slide rail mainly includes an upper rail and a lower rail, in which the lower rail is fixed and longer in length, the upper rail is shorter in length, and the upper rail slides relatively along the lower rail. Since the upper rail cannot completely cover the lower rail, foreign matters are easy to fall into a hollow area of the lower rail from above, affecting the sliding performance of the slide rail, especially foreign matters falling on the screw rod will shorten the service life of the slide rail, or even cause a blockage of the slide rail, resulting in the slide rail cannot run normally. For long slide rails, the longer the length of the lower rail, the higher the risk of foreign matters falling into the slide rail, so preventing design of slide rail from foreign matters has a huge impact on the service life and performance of the slide rail.

One of the technical problems to be solved in this disclosure is: how to solve the problem of preventing foreign matters from falling into the automobile seat slide rail.

The Seat slide rail mainly includes an upper rail and a lower rail, in which the lower rail is fixed and longer in length, the upper rail is shorter in length, and the upper rail slides relatively along the lower rail. Since the upper rail cannot completely cover the lower rail, foreign matters are easy to fall into a hollow area of the lower rail from above, affecting the sliding performance of the slide rail, especially foreign matters falling on the screw rod will shorten the service life of the slide rail, or even cause a blockage of the slide rail, resulting in the slide rail cannot run normally. To solve the above problems, a zipper structure is designed on the slide rail to avoid the risk of foreign matters falling into the rail, specifically a zipper is installed on the lower rail, a zipper head is installed on each end of the upper rail, the zipper in the upper rail area is held open, and the other areas are closed by the zipper chain teeth. Due to the width of the upper rail is limited by the other structural dimensions, and the width of the upper rail is generally more than 2cm, and at the same time, because the upper rail is driven by the motor to carry out the full automation of the sliding, in the high-speed sliding process of the upper rail, the chain teeth that are not interlocking in two sides of the upper rail will inevitably have friction with the upper rail, causing noise, and in the long run there will be a certain degree of wear and tear on the chain teeth, which affects the interlocking of the chain teeth between the teeth and the life of the chain.

One of the technical problems to be solved in this disclosure is: how to reduce the friction between the chain teeth and the upper rail.

The Seat slide rail mainly includes an upper rail and a lower rail, in which the lower rail is fixed and longer in length, the upper rail is shorter in length, and the upper rail slides relatively along the lower rail. Since the upper rail cannot completely cover the lower rail, foreign matters are easy to fall into a hollow area of the lower rail from above, affecting the sliding performance of the slide rail, especially foreign matters falling on the screw rod will shorten the service life of the slide rail, or even cause a blockage of the slide rail, resulting in the slide rail cannot run normally. To solve the above problems, a zipper structure is designed on the slide rail to avoid the risk of foreign matters falling into the rail, specifically a zipper is installed on the lower rail, a zipper head is installed on each end of the upper rail, the zipper in the upper rail area is held open, and the other areas are closed by the zipper chain teeth. Due to the width of the upper rail is limited by the other structural dimensions, and the width of the upper rail is generally more than 2cm, and at the same time, because the upper rail is driven by the motor to carry out the full automation of the sliding, if the two teeth chains are separated and respectively on both sides of the upper rail, it is likely to lead to the formation of the two zipper chain teeth at an angle that is too large, due to the seat is at a high speed sliding, it is easy to have a jam when the zipper teeth are interlocking, and at the same time, the zipper head are unable to be autonomously adjusted.

One of the technical problems to be solved by the present disclosure is: how to solve the problem that the angle between the two zipper chain teeth is too large to affect the interlocking of the zipper teeth.

### Summary

To overcome shortcomings of the prior art, one of the purposes of this application is to provide a zipper structure for preventing foreign matters from falling into the rail, which is simple to install, slides smoothly and has stable performance.

According to the first aspect of this application, a technical solution adopted is that: A zipper structure for a seat slide rail for preventing foreign matters from falling into the rail, comprising an upper rail and a lower rail, and the upper rail and the lower rail being in sliding fit, and the upper rail being provided at each of both ends with a zipper head which is movably connected to the upper rail, and the lower rail being provided with two dustproof rubber covers fixed at an upper end, and the two dustproof rubber covers being set respectively at both sides of the lower rail, and a sewn elastic cloth being set between the dustproof rubber cover and the lower rail, and the sewn elastic cloth being fixedly connected to the dustproof rubber cover or the lower rail on one side, and being set with zipper chain teeth on the other side, and two zipper chain teeth are respectively connected with the zipper head, and when the zipper head slides, the zipper chain teeth are interlocked with each other or separated from each other.

When the upper rail slides, driving the zipper head slides, and the two sets of zipper chain teeth of the lower rail mesh or separate with each other, thereby sealing the hollow area of the lower rail to prevent foreign matters from falling into the lower rail, and the dustproof rubber cover also plays a role in shielding foreign objects. The double protection effectively prevents foreign matters from falling into the rail. In addition, the dustproof rubber cover has a certain elasticity, which can buffer the vibration caused by the sliding of the upper rail. The use of sewn elastic cloth can be applied to rails of various widths, and when the upper rail slides, the sewn elastic cloth can be contracted to avoid or extended to close.

In some embodiments, a steel wire is fixedly connected with the sewn elastic cloth and set on one side of which the sewn elastic cloth connected with the dustproof rubber cover, and the sewn elastic cloth is fixedly connected with the dustproof rubber cover through the steel wire. Because the sewn elastic cloth is a flat structure, if it is directly fixedly connected to the dustproof rubber cover by screws, local area of the sewn elastic cloth is easily pulled and broken. The sewn elastic cloth is connected to the dustproof rubber cover through the steel wire to avoid local breakage.

In some embodiments, the dustproof rubber cover is provided with a buckle cover which is shaped to cooperate with an inner side thereof, and the steel wire is pressed between the dustproof rubber cover and the buckle cover. The steel wire is fixed between the dustproof rubber cover and the buckle cover, which is convenient for replacing the sewn elastic fabric on the one hand, and the connection structure is reliable and low in cost on the other hand, and the sewn elastic fabric can be fixed as a whole, rather than partially fixed.

In some embodiments, a fixing aid part is fixedly set on one side of which the sewn elastic cloth is connected with the dustproof rubber cover, and the fixing aid part has a longitudinal cross section in a shape of a wide upper part and a narrower lower part from top to bottom, and the dustproof rubber cover is provided with a fixing groove corresponding to the fixing aid part in a male and female fit. The fixing aid part is pushed and pulled on the fixing groove, and the sewn elastic fabric can be disassembled or installed, which is easy to operate.

In some embodiments, the upper rail is provided with zipper sliders respectively fixedly connected at each of both ends, and the zipper slider is rotationally connected with the zipper head by a vibration-dampening screw, and the vibration-dampening screw connects an upper end of the zipper slider and the zipper head in a longitudinal direction, and the vibration-dampening screw is fixedly connected to the zipper slider and is rotationally connected to the zipper head. The zipper head has a certain degree of rotational freedom in the horizontal direction, so that when the upper rail slides, the zipper head can better adapt to the angle change of the zipper chain teeth caused by the elastic fabric sewn on both sides to prevent the zipper chain teeth from getting stuck.

In some embodiments, the upper rail is provided with zipper sliders respectively fixedly connected to it at each of both ends, and the zipper slider is rotationally connected with the zipper head by a vibration-dampening screw, and the vibration-dampening screw connects an upper end of the zipper slider and the zipper head in a horizontal direction, and the vibration-dampening screw is fixedly connected to the zipper slider and the zipper head, limiting the vibration of the zipper head in the up and down directions, and when the upper rail slides, avoid the zipper chain teeth getting stuck due to the angle change of the zipper chain teeth caused by the vibration of the zipper head during the pulling process.

In some embodiments, the upper rail is set with U-shaped side grooves on both sides. Because there is inevitably a gap between the upper rail and the dustproof rubber cover or the zipper chain teeth during the sliding process, to completely isolate foreign dust from entering the lower rail, the U-shaped side groove of the upper rail can carry dust entering from the gap.

In some embodiments, the U-shaped side groove is provided with a pulley underneath. The pulley is provided to slide more smoothly.

The beneficial effects of the embodiments of the zipper structure for a seat slide rail for preventing foreign matters from falling into the rail described above include but are not limited to:
The zipper structure effectively prevents various foreign matters from entering the lower rail and causing the upper rail to be unable to slide normally by setting a zipper structure above the rail, reducing daily cleaning work, and ensuring the service life and performance of the rail. The zipper structure has a long service life and stable performance, and long-term use will not affect the dustproof performance.

To overcome shortcomings of the prior art, one of the purposes of this application is to provide a zipper structure for a seat slide rail.

According to the second aspect of the present application, a technical solution adopted is that: zipper structure for a seat slide rail, comprising a zipper head and zipper chain teeth, and two zipper chain teeth passing through inside of the zipper head, and the zipper structure further comprising a zipper slider and an upper rail, and the zipper slider being connected to the zipper head, and the zipper slider comprising a guiding portion and a sliding portion, and the guiding portion and sliding portion forming a step from top to bottom, and the guiding portion being provided with guiding surfaces extending gradually outwardly from front to rear on both sides respectively, and two zipper sliders being fixedly connected to each of both ends of the upper rail respectively, and a connecting area between the guiding surface and the upper rail being located at outer side of the upper rail, and the zipper head comprising a separating end, and the two zipper chain teeth passing through the separating end and then respectively abutting against their corresponding guiding surfaces.

The chain teeth pass through the separating end and the guiding surface of zipper head in sequence. Since the guiding surface gradually extends outward from front to back, the chain teeth also extend from inside to outside; and since the guiding portion and the sliding portion form a step from top to bottom, and one end of the chain teeth is always in a closed state, the chain teeth have a tendency to move inward, so the chain teeth are always in the guiding portion; and since the intersection of the guiding surface and the upper rail is on the outside of the upper rail, that is, the two chain teeth are on the outside of the upper rail after leaving the guiding surface, that is, there is a certain distance between the chain teeth and the upper rail, so that there is a low friction or even no friction relationship between the chain teeth and the upper rail.

In some embodiments, an angle between a surface of the guiding surface and a horizontal plane gradually increases from front to rear, and the angle between the rear end of the guiding surface and the horizontal plane is not greater than 90°. When the chain teeth are separated, the chain teeth enter the sliding surface along the guiding bump. Because the sliding surface is narrow at the top and wide at the bottom, and the angle with the horizontal plane gradually approaches 90°, the overall angle of the chain teeth will gradually change from slightly upward to vertically upward when passing through the sliding surface, avoiding the direct friction between the tooth ends of the teeth and the surface of the zipper slider, and also avoiding the friction between the tooth ends of the chain teeth and the surface of the upper rail, reducing the wear of the teeth ends of the zipper teeth.

In some embodiments, a guiding bump is provided between two guiding surfaces abutting against the separating end, and the zipper chain teeth gradually extend outwardly along the guiding bumps and the guiding surfaces in turn. To better allow the two chain teeth to enter the predetermined corresponding guiding surface, the guiding bump can allow the chain teeth that leave the separating end to continue to remain in a separated state and enter the corresponding guiding surface respectively.

In some embodiments, the guiding surface extends outwardly from top to bottom, and the guiding portion is provided with a guiding step being set above the guiding surface and a step line is formed between the guiding step and the guiding surface, and two extension lines of the step lines and front ends of the guiding bump form an angle of not more than 60°. Because the guiding surface extends outward from top to bottom and from front to back, the chain teeth will extend upward and backward along the guiding surface. And because a step line is formed at the junction of the guiding step and the guiding surface, the chain teeth will continue to extend outward along the step line until they are separated from the step line. The extension line of the two step lines forms an angle of no more than 60° with the front end of the guiding bump, which can make the angle between the two chain teeth always no more than 60° during operation, which is conducive to the engagement between the chain teeth.

In some embodiments, the plane in which the separating end is located is not higher than the plane in which the step line is located. If the plane where the separating end is located exceeds the plane where the step line is located, the chain teeth may cross the guiding step and fail to enter the established route, so this scheme is to ensure that the chain teeth can extend outward along the step line.

In some embodiments, the guiding bump is provided with a fixing groove on rear side of the guiding bump, and the fixing groove is set with a fixing hole an adjusting screw threadedly connected thereto at the bottom of the fixing groove, and a connecting member rotationally connected with the adjusting screw is set fixedly at the upper end of the zipper head, and a gap is provided between two sides of the connecting member and the two sides of the fixing groove respectively. The zipper head has a certain rotation space, and when the seat slides at high speed, the zipper head can better adapt to the angle change between the chain teeth caused by vibration.

In some embodiments, the sliding portion is provided with a sliding space allowing an external screw rod to pass through. Because the sliding portion is arranged below the guiding portion, the screw rod passes below without affecting the operation of the zipper, the overall structure is more compact and can also play a certain role in preventing foreign matters from entering the screw rod.

In some embodiments, the zipper slider has a smooth surface. The overall smoothness of the zipper slider surface is conducive to the extension or contraction of the chain teeth along a predetermined route.

In some embodiments, the zipper slider is of an axisymmetric structure. The axisymmetric zipper slider can ensure that the two chain teeth are on the same plane after separation, and reduce the height difference between the chain teeth when engaging.

In some embodiments, wherein rear end of the zipper slider is fixedly sleeved connected to the upper rail. The structure is set more compactly. This scheme proves that the width of the rear end of the zipper slider is always greater than the width of the upper rail, once again ensuring that the chain teeth are on the outside of the upper rail after leaving the zipper slider.

The beneficial effects of the above-mentioned embodiments of the zipper structure for a seat rail include but are not limited to:
By designing a zipper slider between the zipper head and the upper rail, the chain teeth can be engaged or separated according to a predetermined route, ensuring that the chain teeth still maintain a certain distance from the upper rail when not engaged, reducing the noise caused by friction with the upper rail, improving the user experience, and reducing the wear of the chain teeth, thereby extending the life of the chain teeth.

To overcome shortcomings of the prior art, one of the purposes of this application is to provide a zipper structure for facilitating interlocking for a seat slide rail.

According to the third aspect of the present application, a technical solution adopted is that : a zipper structure for facilitating interlocking for a seat slide rail, comprising a zipper head, zipper chain teeth and an upper rail, and two zipper chain teeth passing through inside of the zipper head, two zipper heads respectively being set at each of both ends of the upper rail, and the zipper head comprising a separating end and an interlocking end, and the zipper structure further comprising a zipper guiding block, and the zipper guiding block being connected to the zipper head at one end and being fixedly connected to the upper rail at the other end, and the zipper guiding block being provided with a guiding bump at a front end of the zipper guiding block abutting against the separating end, and the zipper guiding block being provided with a guiding step from top to bottom, a guiding sliding surface, and a sliding step, two guiding steps and two guiding sliding surfaces being provided on each side of the zipper guiding block, and the guiding bumps being located in a plane coinciding with a plane in which the guiding sliding surfaces are located, and the guiding sliding surfaces extending outwardly from the top to the bottom, and a connecting area between the guiding step and guiding sliding surface forming a guiding line, and extension lines of two guiding lines and the guiding bump forming an angle of not more than 60°.

The two zipper chain teeth enter the zipper guiding block along the guiding sliding surface. Due to the existence of the guiding lines, the zipper chain teeth will not cross the guiding lines to reach the guiding step, but will slide forward along the guiding lines. Moreover, the guiding sliding surface extending outward from top to bottom has been engaged with one end of the two zipper chain teeth. The zipper chain teeth are always in a tendency to move inward, so they will not leave the guiding sliding surface and descend to the sliding step. The plane where the guiding bump is located is consistent with the plane where the guiding sliding surface is located. The zipper teeth can reach the guiding bump along the guiding sliding surface. The guiding bump abuts against the separating end of the zipper head. The zipper chain teeth passing through the guiding bump can smoothly enter the zipper head from the separating end. Since the two zipper chain teeth reach the guiding bump along the guiding lines, before entering the separating end and preparing for engagement, the angle between the two zipper chain teeth and the guiding bump is the angle between the two guiding lines and the guiding bump, that is, the angle between the two zipper chain teeth and the guiding bump is not greater than 60°. Within this angle range, the friction between the zipper teeth and the zipper head is small, which helps the engagement between the zipper teeth.

In some embodiments, an angle between a surface of the guiding sliding surface and a horizontal plane gradually increases from front to rear, and the angle between the rear end of the guiding sliding surface and the horizontal plane is not greater than 90°. When the zipper chain teeth are separated, the zipper chain teeth enter the guiding sliding surface along the guiding bump. Since the guiding sliding surface is narrow at the top and wide at the bottom, and the angle with the horizontal plane gradually approaches 90°, the overall angle of the zipper chain teeth will gradually change from slightly upward to vertically upward when passing through the guiding sliding surface, avoiding the direct friction between the teeth ends of the zipper teeth and the surface of the zipper guiding block, and also avoiding the friction between the teeth ends of the zipper chain teeth and the surface of the upper rail, reducing the wear of the teeth ends of the zipper chain teeth.

In some embodiments, an angle between a surface of the guiding step and aa horizontal plane is smaller than an angle between the surface of the guiding sliding surface and the horizontal plane. This solution can form a more obvious guiding line, and the larger the angle between the guiding sliding surface and the horizontal plane, the more it helps the zipper teeth maintain the upward movement trend.

In some embodiments, the zipper guiding block is of an axisymmetric three-dimensional structure, and the guiding bump is provided between the two guiding sliding surfaces, and each of the two zipper chain teeth passes along the guiding sliding surfaces and then through the guiding bump. Because the zipper head is an axisymmetric structure, the zipper guide block is an axisymmetric three-dimensional structure, which helps to make the two zipper chain teeth enter the zipper head synchronously, which is conducive to the engagement between the zipper teeth.

In some embodiments, the guiding sliding surface extends outwardly from front to rear. Since the engagement process of the zipper chain teeth is a narrowing process, the guiding sliding surface extends outward from front to rear to cooperate with the engagement process of the zipper chain teeth, making the engagement process smoother.

In some embodiments, a first fixing hole is set above the guiding bump, and a second fixing hole connected with the first fixing hole is set at the upper end of the zipper head, and a fixing screw is set between the first fixing hole and the second fixing hole, and the fixing screw is threadedly connected respectively to the first fixing hole and the second fixing hole. The abutment relationship between the fixed guiding bump and the zipper head is fixed so that the zipper teeth can smoothly enter the zipper head from the guiding bump.

In some embodiments, the guiding bump is provided with a fixing groove on rear side of the guiding bump, and the fixing groove is set with a fixing hole and adjusting screw threadedly connected thereto at the bottom of the fixing groove, and a connecting member rotationally connected with the adjusting screw is set fixedly at the upper end of the zipper head, and a gap is provided between two sides of the connecting member and the two sides of the fixing groove respectively. The zipper head has a certain rotation space, and when the seat slides at high speed, the zipper head can better adapt to the angle change between the zipper teeth caused by vibration.

In some embodiments, the sliding step is provided with a sliding space allowing an external screw rod to pass through. Without affecting the zipper engagement process, the screw passes through the sliding step, the overall structure is more compact and can also play a certain role in preventing foreign matter from entering the screw.

In some embodiments, a distance between the ends of two guiding lines is greater than a width of the upper rail. Since the zipper teeth are along the guiding lines on the guiding sliding surface, the width of the zipper teeth when entering the guiding sliding surface is the distance between the ends of the two guiding lines. This distance is greater than the width of the upper rail, that is, there is a certain distance between the zipper teeth and the upper rail, which reduces the friction between the zipper teeth and the upper rail to a certain extent, and reduces the wear of the zipper teeth.

In some embodiments, the guiding sliding surface has a smooth surface. The smooth surface of the guiding sliding surface is conducive to the contraction of the chain teeth along the predetermined route.

The beneficial effects of the above-mentioned embodiment of the zipper structure for facilitating interlocking for a seat slide rail include but are not limited to: the zipper structure for facilitating interlocking for a seat slide rail sets a zipper guiding block between the zipper head and the upper rail, so that the two separated zipper chain teeth enter the zipper head at a smaller angle, reducing the friction between the zipper teeth and the zipper head, ensuring that the zipper head engages the zipper teeth when the seat slides at high speed, thereby improving the user experience and reducing the wear of the zipper teeth.

### Description of attached drawings

The above embodiments of the present disclosure will be better understood after reading the detailed description of the embodiments of the present disclosure in conjunction with the following figures. In the figures, components are not necessarily drawn to scale, and components having similar related features may have the same or similar reference numerals.
FIG. 1 shows a schematic diagram of the overall structure of embodiment 1 of a zipper structure for a seat slide rail preventing foreign matters;
FIG. 2 shows an enlarged schematic diagram of the structure of labeled A of FIG. 1 ;
FIG. 3 is a schematic diagram of the structure of the upper rail connected to the screw rod of an embodiment 1 of the zipper structure for a seat slide rail preventing foreign matters;
FIG. 4 is a schematic structural diagram of a zipper slider connected to a zipper head of the embodiment 1 of the zipper structure for a seat slide rail preventing foreign matters;
FIG. 5 is a schematic structural diagram of the connection between a dustproof rubber cover and a sewn elastic cloth of an embodiment 2 of the zipper structure for a seat slide rail preventing foreign matters;
FIG. 6 is a schematic diagram of the structure of the zipper slider connected to the zipper head of the embodiment 2 of the zipper structure for a seat slide rail preventing foreign matters;
FIG. 7 is a schematic diagram of the structure of the connection between a lower rail and the sewn elastic cloth of an embodiment 3 of the zipper structure for a seat slide rail preventing foreign matters;
FIG. 8 is a schematic structural diagram of the connection between the dustproof rubber cover and the sewn elastic cloth of an embodiment 4 of the zipper structure for a seat slide rail preventing foreign matters;
FIG. 9 is a schematic diagram of the structure of the connection between the dustproof rubber cover and the sewn elastic cloth of an embodiment 5 of the zipper structure for a seat slide rail preventing foreign matters;
FIG. 10 is a schematic diagram of the structure of the connection between the dustproof rubber cover and a fixing aid part of an embodiment 6 of the zipper structure for a seat slide rail preventing foreign matters;
FIG. 11 is a schematic diagram of the connection structure of the dustproof rubber cover and the fixing aid part of an embodiment 7 of the zipper structure for a seat slide rail preventing foreign matters;
FIG. 12 is a schematic diagram of the connection structure between the dustproof rubber cover and the fixing aid part of an embodiment 8 of the zipper structure for a seat slide rail preventing foreign matters;
FIG. 13 is a schematic diagram of the connection structure between the dustproof rubber cover and the fixing aid part of an embodiment 9 of the zipper structure for a seat slide rail preventing foreign matters;
FIG. 14 is a schematic diagram of an overall structure of the zipper structure for a seat slide rail;
FIG. 15 is a schematic diagram of the connection structure of an upper rail, a zipper slider, a zipper head and a screw rod;
FIG. 16 is a schematic diagram of the connection structure of the zipper slider and the zipper head;
FIG. 17 is a schematic diagram of the structure of the zipper slider;
Figure 18 is a schematic diagram of the structure of the zipper head;
FIG. 19 is a top view of the overall structure of an embodiment 1 of the zipper structure for facilitating interlocking for a seat slide rail;
FIG. 20 is a schematic diagram of the connection structure of a zipper head, a zipper guiding block, the upper rail and a screw rod of the embodiment 1 of the zipper structure for facilitating interlocking for a seat slide rail;
FIG. 21 is a schematic diagram of the connection structure of the zipper head and the zipper guiding block of the embodiment 1 of the zipper structure for facilitating interlocking for a seat slide rail;
FIG. 22 is a schematic diagram of the structure of the zipper guiding block of the embodiment 1 of the zipper structure for facilitating interlocking for a seat slide rail;
FIG. 23 is a schematic diagram of the structure of the zipper head of the embodiment 1 of the zipper structure for facilitating interlocking for a seat slide rail;

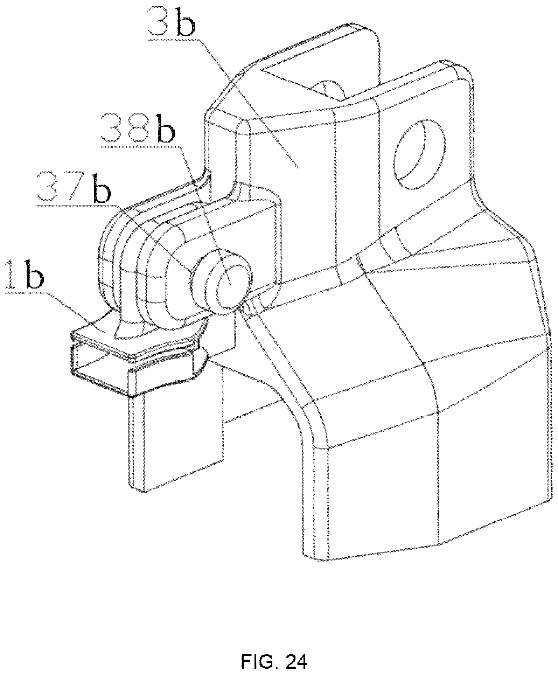

FIG. 24 is a schematic diagram of the structure of the zipper head connected to the zipper guiding block of an embodiment 2 of the zipper structure for facilitating interlocking for a seat slide rail;
FIG. 25 is a schematic diagram of the structure of the zipper head of the embodiment 2 of the zipper structure for facilitating interlocking for a seat slide rail;
FIG. 26 shows a graph of different interlocking angles between two zipper chain teeth as a function of the required sliding force thereof.

### Reference numerals:

1, upper rail; 2, lower rail; 11, U-shaped side groove; 12, zipper slider; 13, vibration-damping screw; 21, reversed-U-shaped side groove; 22, dustproof rubber cover; 31, zipper head; 32, sewn elastic cloth; 33, zipper chain teeth; 34, steel wire; 35, buckle cover; 36, fixing aid part; 37, fixing groove; 38, metal sheet member; 39, fixing hole;
1a, zipper head; 2a, zipper chain teeth; 3a, zipper slider; 4a, upper rail; 5a, screw rod; 11a, interlocking end; 12a, separating end; 13 a, connecting member; 31a, sliding portion; 32a, guiding portion; 33a, guiding bump; 34a, fixing groove; 35a, adjusting screw; 36a, connecting hole; 321a, guiding surface; 322a, guiding step; 323a, step line;
1b, zipper head; 2b, zipper chain teeth; 3b, zipper guiding block; 4b, upper rail; 5b, screw; 11b, interlocking end; 12b, separating end; 13b, connecting member; 30b, guiding bump; 31b, sliding step; 32b, guiding sliding surface; 33b, guiding step; 34b, fixing groove; 35b, adjusting screw; 36b, connecting hole; 321b, guiding line; 37b, first fixing hole; 14b, second fixing hole; 38b, fixing screw.

### Detailed Description of Embodiments

Hereinafter, embodiments of the present disclosure will be described in detail with reference to the drawings. And embodiments are merely used to more clearly explain the solution of the present disclosure, and therefore are merely examples, and should not limit the scope of protection of the present disclosure.

### A zipper structure for a seat slide rail preventing foreign matters

### Embodiment 1

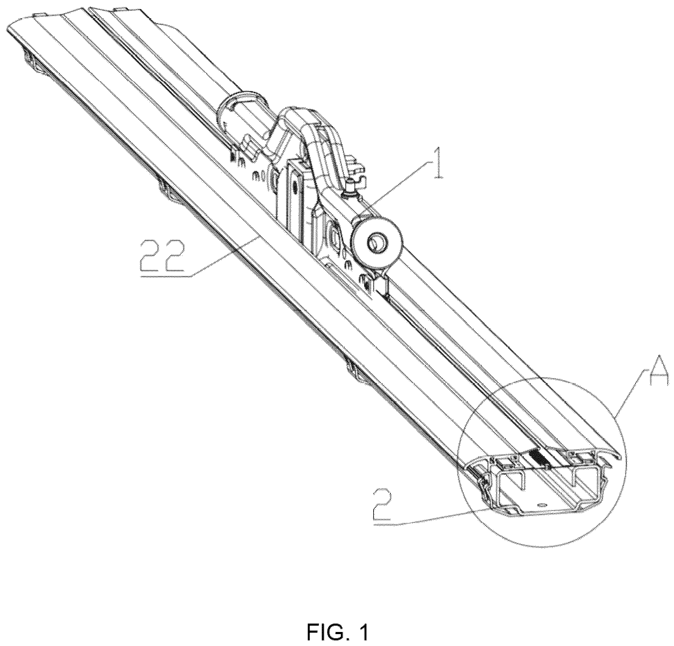

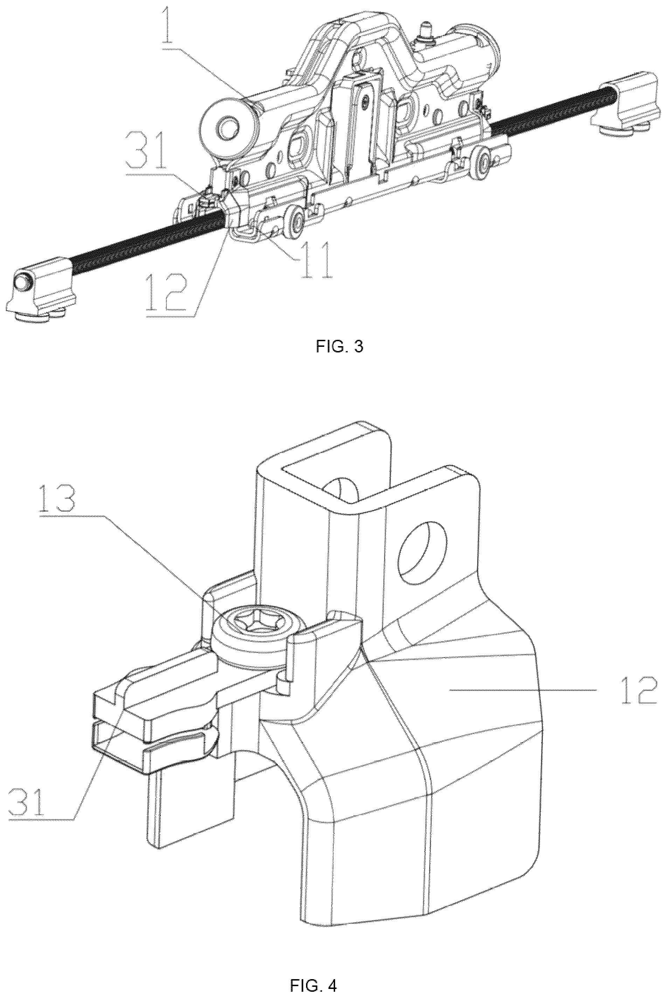

Referring to FIG. 1 and FIG. 3, the zipper structure for a seat slide rail preventing foreign matters includes an upper rail 1 and a lower rail 2, and the upper rail 1 and the lower rail 2 are in sliding fit, and a screw rod is provided in the lower rail 2, an lower end of the upper rail 1 is slide fitted with the screw rod, and sliding is carried out along the screw rod, and the upper rail 1 is provided with a U-shaped side groove 11 on both sides, and the lower rail 2 is provided with a reversed-U-shaped side groove 21, and the U-shaped side groove 11 is set within the reversed-U-shaped side groove 21 on one side. One or more pulleys are set underneath the U-shaped side groove 11, and the pulleys rotate on the lower rail 2.

The upper rail 1 is provided at each of both ends with a zipper head 31 which is movably connected to the upper rail 1, and the lower rail 2 is provided with two dustproof rubber covers 22 fixed at an upper end, and the two dustproof rubber covers 22 are set respectively at both sides of the lower rail 2, and a sewn elastic cloth 32 is set between the dustproof rubber covers 22 and the lower rail 2, and the sewn elastic cloth 32 is fixedly connected to the dustproof rubber cover 22 on one side, and is set with zipper chain teeth 33 on the other side, and two groups of zipper chain teeth 33 are respectively connected with the zipper head 31, and when the zipper head slides, the two groups of zipper chain teeth 33 are interlocked with each other or separated from each other.

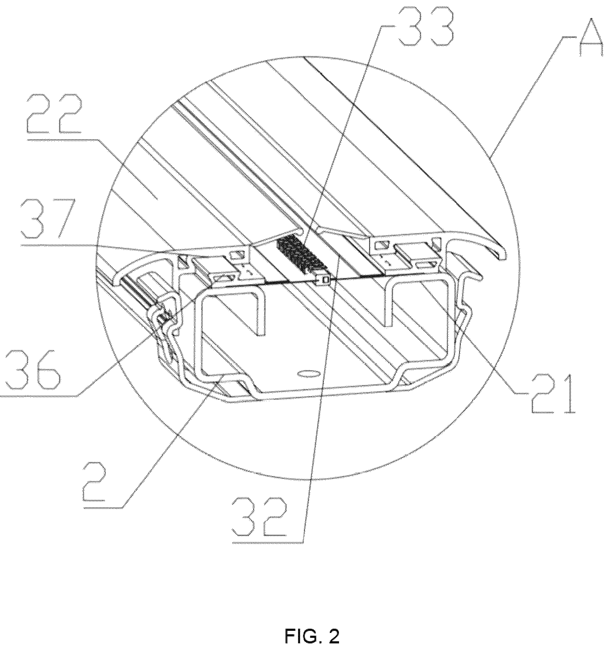

Referring to FIG. 2, a fixing aid part 36 is fixedly set on one side of which the sewn elastic cloth 32 connected with the dustproof rubber cover 22, and fixing aid part 36 is integrally connected with a connecting member, and the sewn elastic cloth 32 is fixedly connected to the connecting member by thread sewing, and the fixing aid part 36 has a longitudinal cross section in a shape of reversed trapezoidal, and the dustproof rubber cover 22 is provided with a fixing groove 37 corresponding to the fixing aid part 36 in a male and female fit.

Referring to FIG. 4, the upper rail 1 is provided with zipper sliders 12 respectively fixedly connected at each of both ends, and the zipper slider 12 is rotationally connected with the zipper head 31 by a vibration-dampening screw 13, and the vibration-dampening screw 13 connects upper end of the zipper slider 12 and the zipper head 31 in a longitudinal direction, and the vibration-dampening screw 13 is fixedly connected to the zipper slider 12 and is rotationally connected to the zipper head 31. With the sliding of the upper rail 1, two sides of the zipper chain teeth 33 have a horizontal direction out of sync due to the elastic cloth 32, and the zipper head 31 in the horizontal direction of a certain degree of rotational freedom can be adapted to angle changes between the zipper chain teeth 33.

The zipper chain teeth 33 and the dustproof rubber cover 22 are set on the whole lower rail 2, and when the upper rail 1 slides the zipper chain teeth 33 and the dustproof rubber cover 22 will be avoided or closed. The zipper head 31 at each end of the upper rail 1 enables the zipper chain teeth 33 to interlock or separate, respectively.

### Embodiment 2

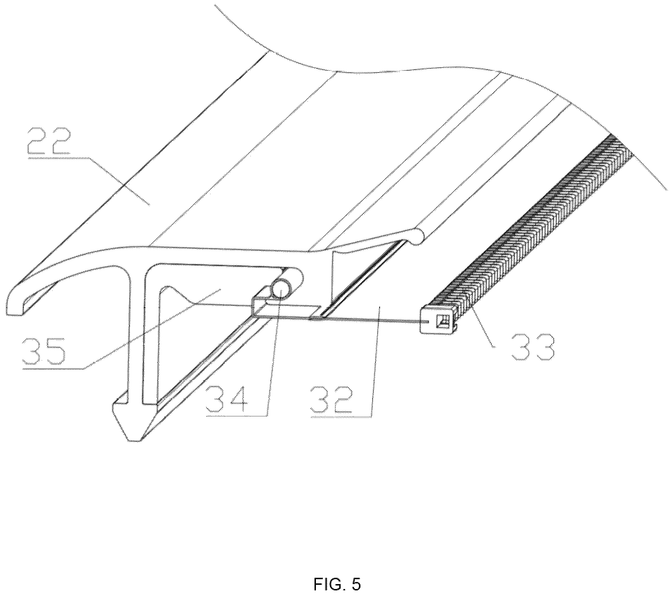

Differing from Embodiment 1, referring to FIG. 5, the side on which the sewn elastic cloth 32 is connected to the dustproof rubber cover 22 is provided with a steel wire 34 fixedly connected to the sewn elastic cloth 32, and the sewn elastic cloth 32 is fixedly connected to the dustproof rubber cover 22 through the steel wire 34. The dustproof rubber cover 22 is provided with a buckle cover 35 which is shaped to cooperate with an inner side thereof, and the steel wire 34 is pressed between the dustproof rubber cover 22 and the buckle cover 35. In some embodiments, the positional relationship between the dust cover 22 and the buckle cover 35 can also be secured by screws.

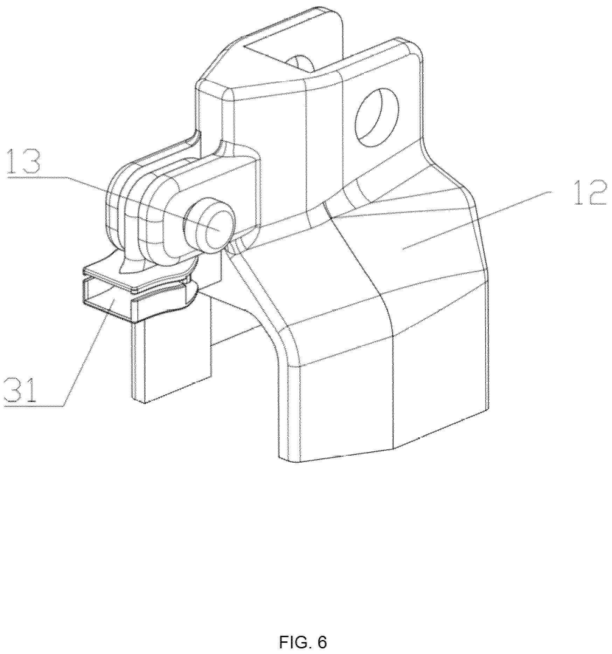

Referring to FIG. 6, the upper rail 1 is provided with zipper sliders 12 respectively fixedly connected to it at each of both ends, and the zipper slider 12 is rotationally connected with the zipper head 31 by a vibration-dampening screw 13, and the vibration-dampening screw 13 connects upper end of the zipper slider 12 and the zipper head 31 in a horizontal direction, and the vibration-dampening screw 13 is rotationally coupled to the zipper slider 12 and the zipper head 31, so that, when the upper rail 1 slides, the zipper head 31 is better adapted to the changes of the angle between the zipper chain teeth 33 caused by vibrations in the pulling process.

### Embodiment 3

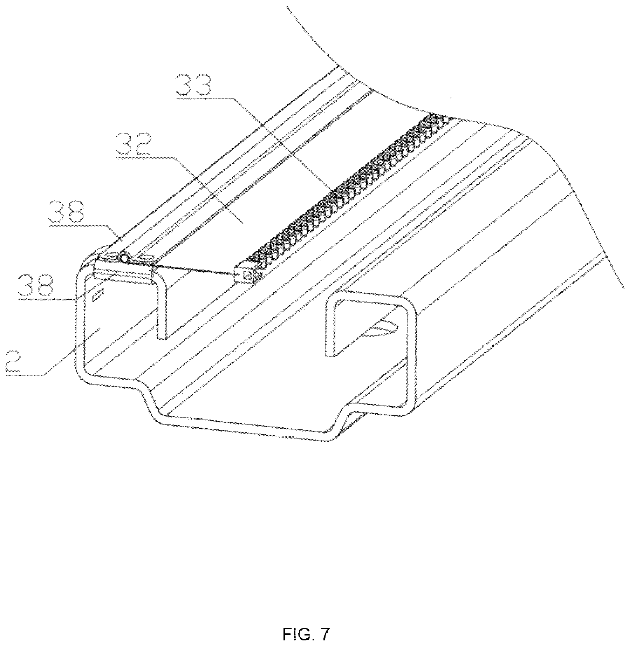

Differing from Embodiment 2, referring to FIG. 7, the steel wire 34 is fixed between two metal sheet members 38, which are fixedly connected by using screws, and both ends of the sheet metal member 38 at a lower position are fixedly connected to the lower rail 2.

### Embodiment 4

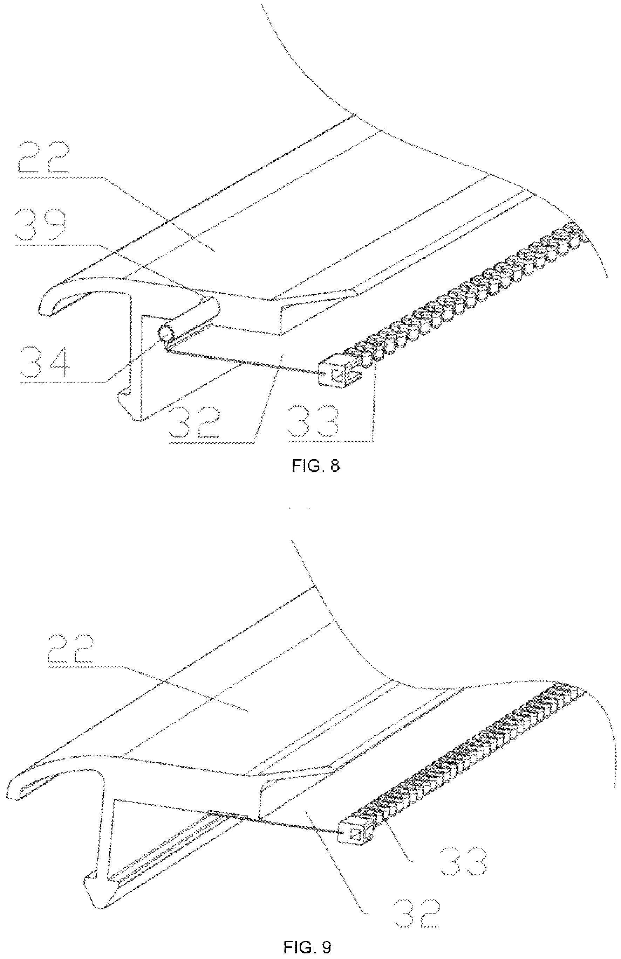

Differing from embodiment 2, referring to FIG. 8, the dustproof rubber cover 22 is provided with a fixing hole 39 shaped to fit the steel wire 34, the fixing hole 39 being provided with a gap in connection with outside, and the gap permits the sewn elastic cloth 32 to pass through.

### Embodiment 5

Differing from Embodiment 1, referring to FIG. 9, the bottom of the dustproof rubber cover 22 is bonded and fixedly connected to one side of the sewn elastic cloth 32, and the bonding method includes a strong glue or a secondary injection molding.

### Embodiment 6

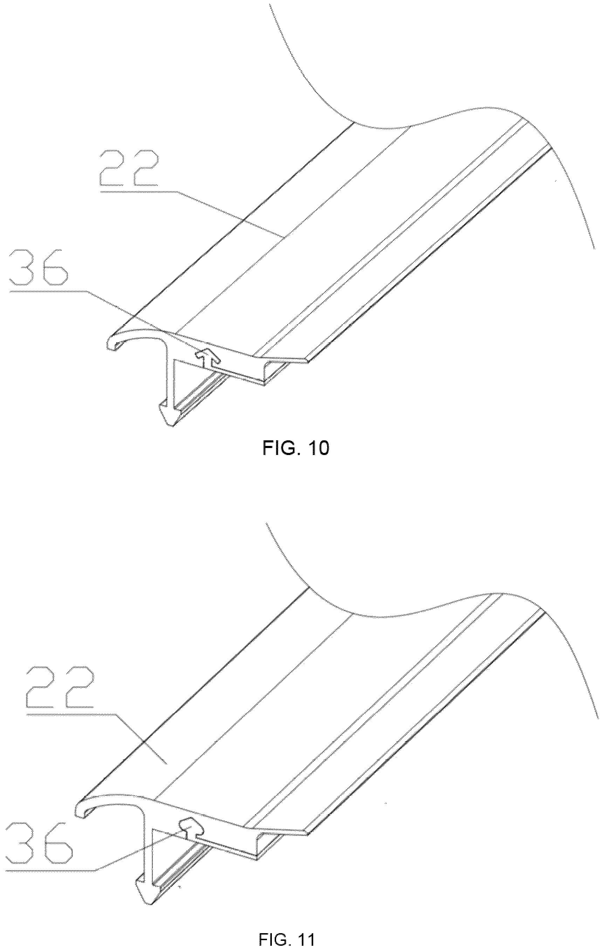

Differing from Embodiment 1, referring to FIG. 10, the longitudinal cross-section shape of the fixing aid part 36 is an arrow.

### Embodiment 7

Different from Embodiment 1, referring to FIG. 11, the longitudinal cross-section shape of the fixing aid part 36 is a reversed heart.

### Embodiment 8

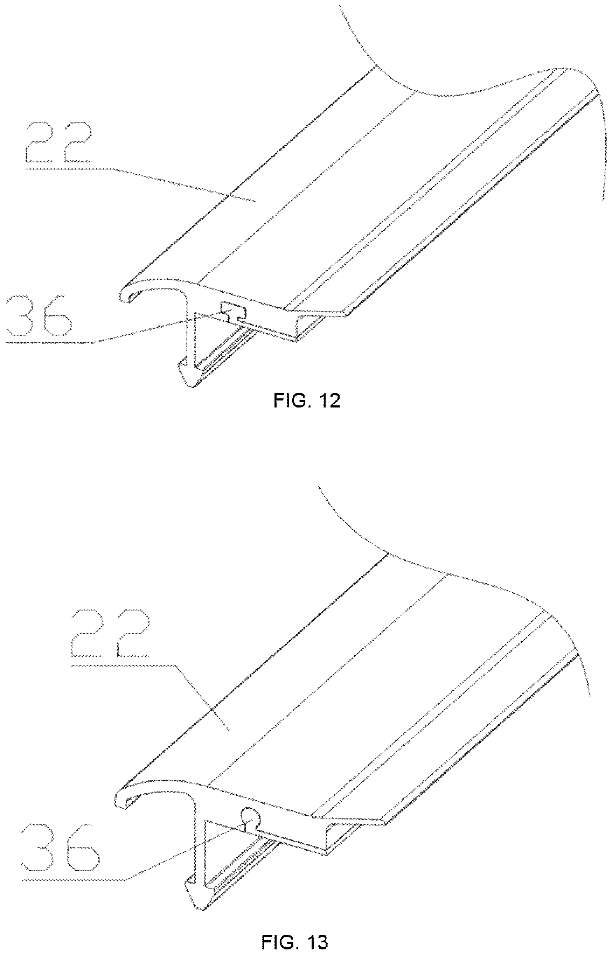

Different from Embodiment 1, referring to FIG. 12, the longitudinal cross-section of the fixture 36 is shaped as a combination of two rectangles set from top to bottom, with the width of the rectangle at the top being longer than the width of the rectangle at the bottom.

### Embodiment 9

Different Embodiment 1, referring to FIG. 13, the longitudinal cross-section shape of the fixing aid part 36 is circular.

### A zipper structure for a seat slide rail

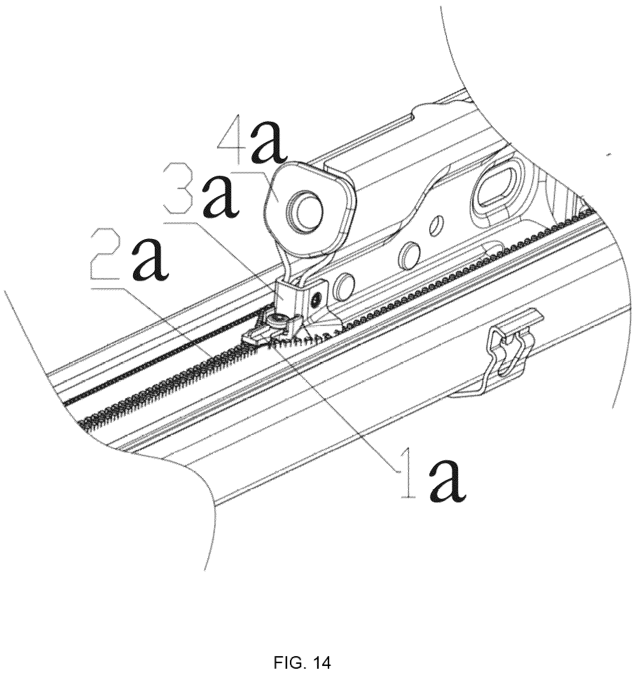

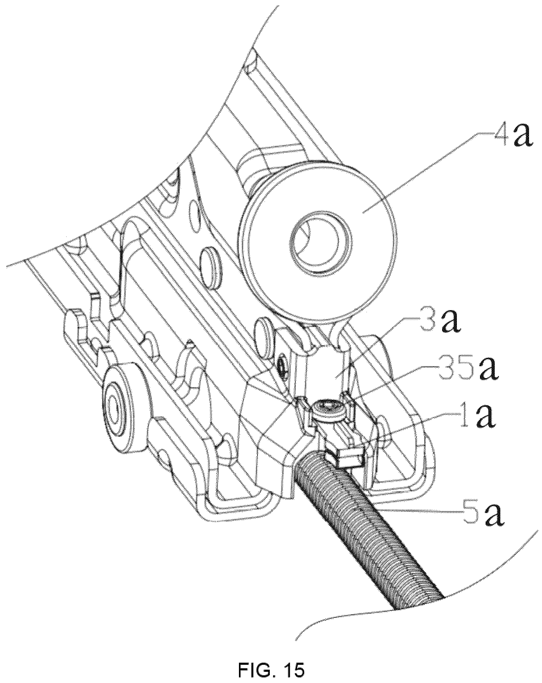

Referring to FIG. 14 and FIG. 15, a zipper structure for a seat slide includes a zipper head 1a, zipper chain teeth 2a, a zipper slider 3a, and an upper rail 4a. And two zipper sliders 3a are connected to each of both ends of the upper rail 4a, respectively, and rear end of the zipper slider 3a is fixedly sleeved connected to the upper rail 4a, and the zipper slider 3a is connected to the zipper head 1a, and both ends of two zipper chain teeth 2a are tightened, and the two zipper chain teeth 2a pass through the zipper head 1a, the zipper slider 3a, and the upper rail 4a in turn, and the zipper chain teeth 2a pass through the inside of the zipper head 1a.

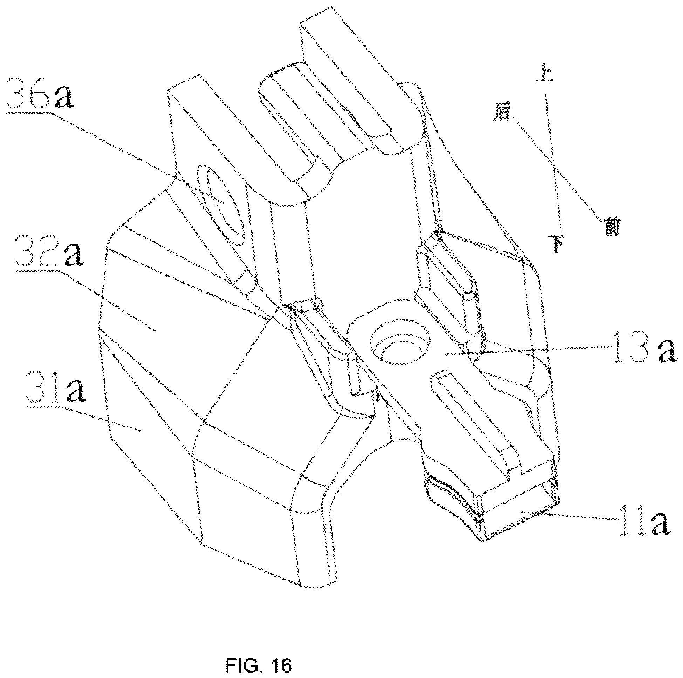

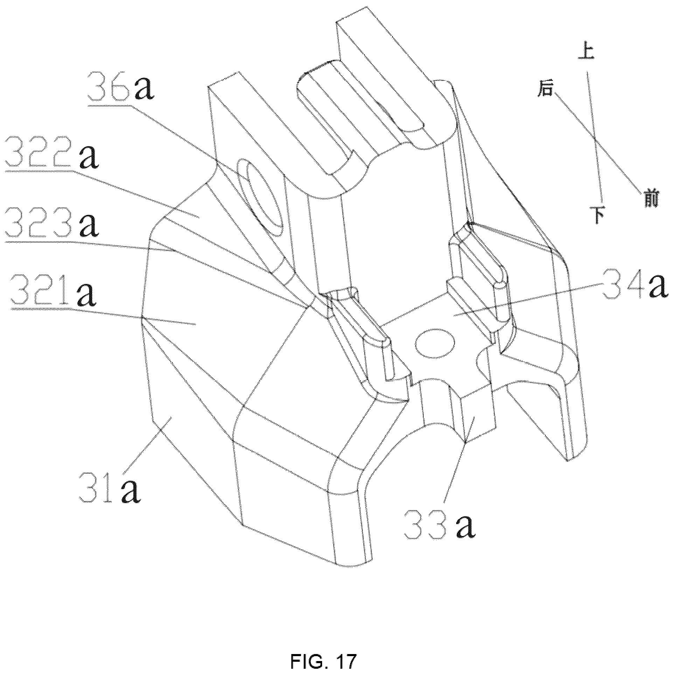

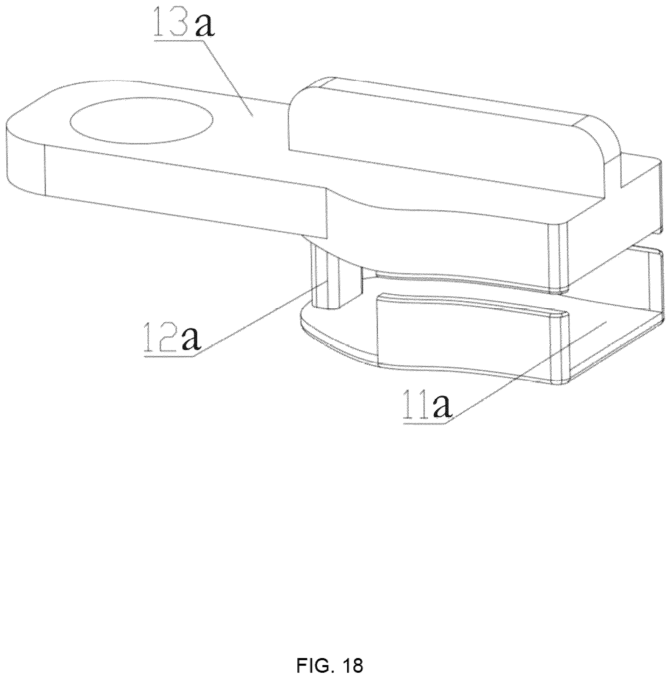

Referring to FIG. 16, FIG. 17, and FIG. 18, surface of the zipper slider 3a, is a smooth surface and the zipper slider 3a is of an axisymmetric structure. The zipper slider 3a includes a guiding portion 32a and a sliding portion 31a, and the sliding portion 31a is provided with a sliding space allowing an external screw rod 5a, to pass through. The guiding portion 32a and sliding portion 31a forms a step from top to bottom, and the guiding portion 32a is provided with guiding surfaces 321a extending gradually outwardly from front to rear on both sides respectively, and an angle between a surface of the guiding surface 321a and a horizontal plane gradually increases from front to rear, and the angle between the rear end of the guiding surface 321a, and the horizontal plane is 80°, and a connecting area between the guiding surface 321a and the upper rail 4a is located at outer side of the upper rail 4a. The zipper head 1a includes an interlocking end 11a and a separating end 12a, and the interlocking end 11a is set opposite to the separating end 12a, and the two zipper chain teeth 2a passing through the separating end 12a and then respectively abutting against their corresponding guiding surfaces 321a. And a guiding bump 33a is provided between two guiding surfaces 321a abutting against the separating end 12a, and the zipper chain teeth 2a gradually extend outwardly along the guiding bumps 33a and the guiding surfaces 321a in turn.

And the guiding bump 33a, is provided with a fixing groove 34a on rear side of the guiding bump 33a, and the fixing groove 34a is set with a fixing hole an adjusting screw 35a threadedly connected thereto at the bottom of the fixing groove 34a, and a connecting member 13a rotationally connected with the adjusting screw 35a is set fixedly at the upper end of the zipper head 1a, and a gap is provided between two sides of the connecting member 13a and the two sides of the fixing groove 34a respectively.

A connecting hole 36a connecting to the upper rail 4a, is set at rear end of the zipper slider 3a, and the connecting hole 36a is set on rear side of the fixing groove 34a.

In order to secure the interlocking between the two zipper chain teeth 2a, in some embodiments, the guiding portion 32a is provided with a guiding step 322a being set above the guiding surface 321a, and a step line 323a is formed between the guiding step 322a and the guiding surface 321a, the step lines stop a tendency of inward from top to bottom of the guiding surface 321a, and two extension lines of the step lines 323a and front end of the guiding bump 33a, form an angle of 60°. And the plane in which the separating end 12a is located is not higher than the plane in which the step line 323a, is located.

The working principle and process of the zipper structure for a seat slide rail is that: After the zipper chain teeth 2a passes through the separating end 12a, it reaches the guiding surface 321a along the guiding bump 33a, and then the chain teeth 2a move outward and upward until abut against the step line 323a, and the chain teeth 2a stop moving upward. However, due to the gradual increase in the angle between the guiding surface 321a and the horizontal plane, the chain teeth 2a gradually changes from slightly upward to vertically upward, that is, the teeth end opening of the chain teeth 2a gradually changes to opening upward until it extends outward and breaks away from the step line 323a. Since the teeth end opening of the chain teeth 2a is upward, direct contact with the upper rail 4a is avoided, reducing the wear on the teeth end of the chain teeth 2a and reducing the noise generated by friction between the chain teeth 2a and the upper rail 4a.

### A zipper structure for facilitating interlocking for a seat slide rail

### Embodiment 1

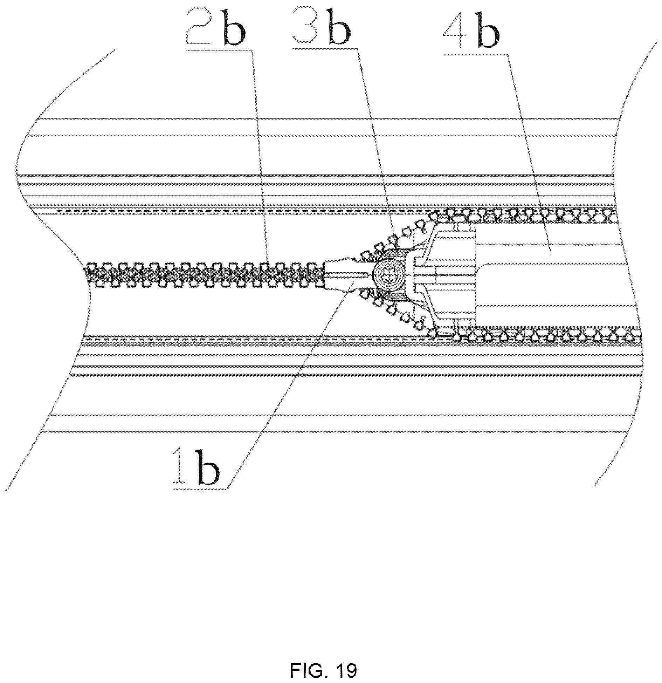

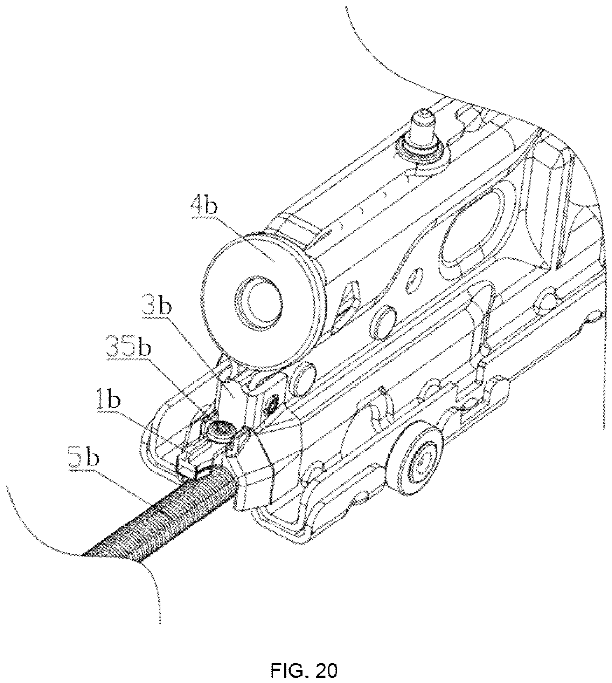

Referring to FIG. 19 and FIG. 20, a zipper structure for facilitating interlocking for a seat slide rail includes a zipper head 1b, zipper chain teeth 2b, a zipper guiding block 3b and an upper rail 4b, and two zipper heads 1b respectively being set at each of both ends of the upper rail 4b, and the two separated zipper chain teeth 2b pass through the upper rail 4b, the zipper guiding block 3b and the zipper head 1b in turn, and the zipper chain teeth 2b pass through the inside of the zipper head 1b, and the zipper head 1b includes an interlocking end 11b and a separating end 12b, and the zipper guiding block 3b is connected to the zipper head 1b at one end and being fixedly connected to the upper rail 4b at the other end. And rear end of the zipper guiding block is fixedly sleeved connected to the upper rail 4b.

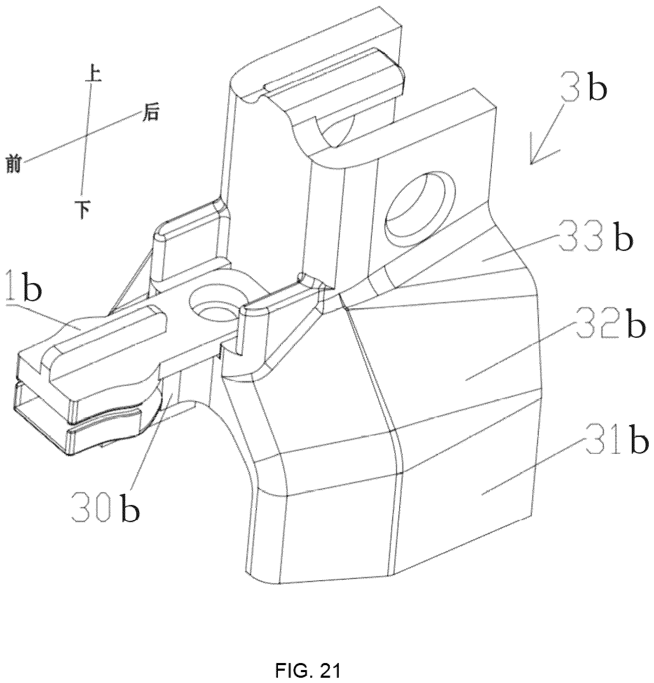

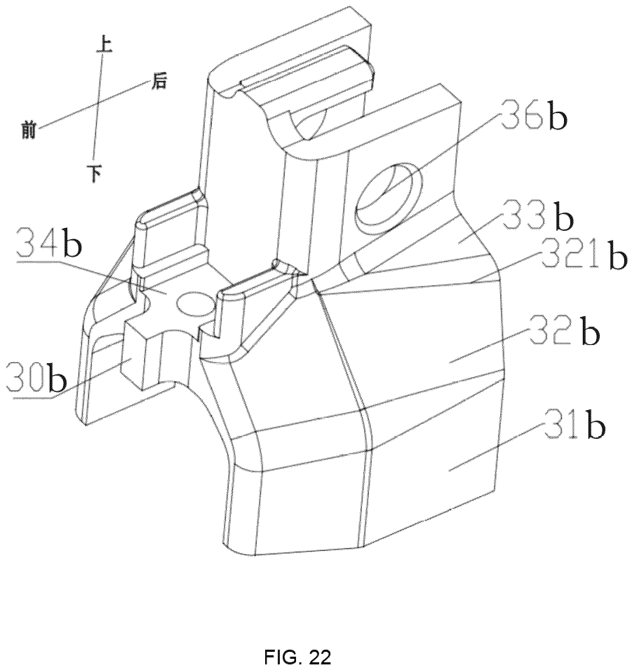

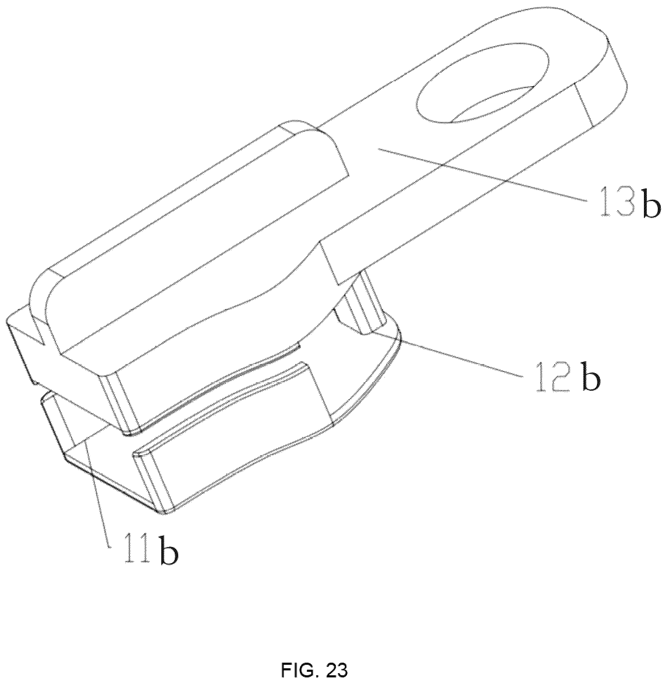

Referring to FIG. 20 to FIG. 23, the zipper guiding block 3b is of an axisymmetric three-dimensional structure, and the zipper guiding block 3b is provided with a guiding bump 30b at front end of the zipper guiding block 3b abutting against the separating end 12b, and the zipper guiding block 3b is provided with a guiding step 33b from top to bottom, a guiding sliding surface 32b, and a sliding step 31b, two guiding steps 33b and two guiding sliding surfaces 32b are provided on each side of the zipper guiding block 3b, and the guiding bump 30b is located in a plane coinciding with a plane in which the guiding sliding surfaces 32b are located, and the guiding sliding surface 32b extends outwardly from the top to the bottom, and an angle between a surface of the guiding sliding surface 32b and a horizontal plane gradually increases from front to rear, and the angle between the rear end of the guiding sliding surface 32b and the horizontal plane is 90°, and the guiding sliding surface 32b is a smooth surface. And because an angle between a surface of the guiding step 33b and the horizontal plane is smaller than an angle between the surface of the guiding sliding surface 32b and the horizontal plane, a connecting area between the guiding step 33b and guiding sliding surface 32b forms an obvious guiding line 321b, and because an angle between the surface of guiding sliding surface 32b and the horizontal plane is smaller than an angle between a surface of the sliding step 31b and the horizontal plane, a connecting area between the sliding step 31b and guiding sliding surface 32b also forms an obvious guiding line 321b, and extension lines of two guiding lines 321b and the guiding bump 30b forming an angle of 60°. And a distance between the ends of two guiding lines 321b is greater than a width of the upper rail 4b. And two separated zipper chain teeth 2b respectively pass through the guiding sliding surface 32b and then the guiding bump 30b.

The guiding bump 30b is provided with a fixing groove 34b on rear side of the guiding bump 30b, and the fixing groove 34b is set with a fixing hole an adjusting screw 35b threadedly connected thereto at the bottom of the fixing groove 34b, and a connecting member 13b rotationally connected with the adjusting screw 35b is set fixedly at the upper end of the zipper head 1b, and a gap is provided between two sides of the connecting member 13b and the two sides of the fixing groove 34b respectively. A connecting hole 36b connected to the upper rail 4b is provided at the rear end of the zipper guiding block 3b, and the connecting hole 36b is arranged on rear side of the fixing groove 34b.

The working principle and process of the present embodiment are as follows: when the zipper chain teeth 2b interlock: the two separated zipper chain teeth 2b enter the zipper guiding block 3b along the guiding sliding surface 32b. Since the zipper chain teeth 2b move inward and upward, the zipper chain teeth 2b slide forward along the guiding line 321b all the way, and after leaving the guiding sliding surface 32b, they pass through the guiding bump 30b and enter the zipper head 1b. The zipper chain teeth 2b interlock inside the zipper head 1b.

And when the zipper chain teeth 2b are separated, the two zipper chain teeth 2b in the interlocked state are separated in the zipper head 1b, and the two zipper chain teeth 2b are guided along the guiding bump 30b and the guiding sliding surface 32b, and the zipper chain teeth 2b move backward along the guiding sliding surface 32b, and the zipper chain teeth 2b gradually change from being slightly upturned to being vertically upward, and the teeth ends of the zipper chain teeth 2b gradually change from being flat opening to being upward opening, so as to avoid direct contact between the teeth ends of the zipper chain teeth 2b and the zipper guiding block 3b and the upper rail 4b, reducing the wear of the zipper chain teeth 2b.

**Table: Different interlocking angles between two zipper chain teeth 2b and the required sliding force:**

| angle /*°* | force /N |
|---|---|
| 30 | 7.5 |
| 40 | 7.8 |
| 50 | 8.3 |
| 60 | 8.7 |
| 65 | 12 |
| 70 | 20 |
| 75 | 30 |
| 80 | 55 |
| 85 | 100 |

It can be seen from the table that the two zipper chain teeth 2b are interlocked at different angles. The larger the angle, the greater the sliding force. Therefore, controlling the angle between the zipper chain teeth 2b to be within 60° for interlocking can effectively reduce the sliding force, ensure the interlocking between the zipper teeth 2b, and increase the service life of the zipper teeth 2b.

### Embodiment 2

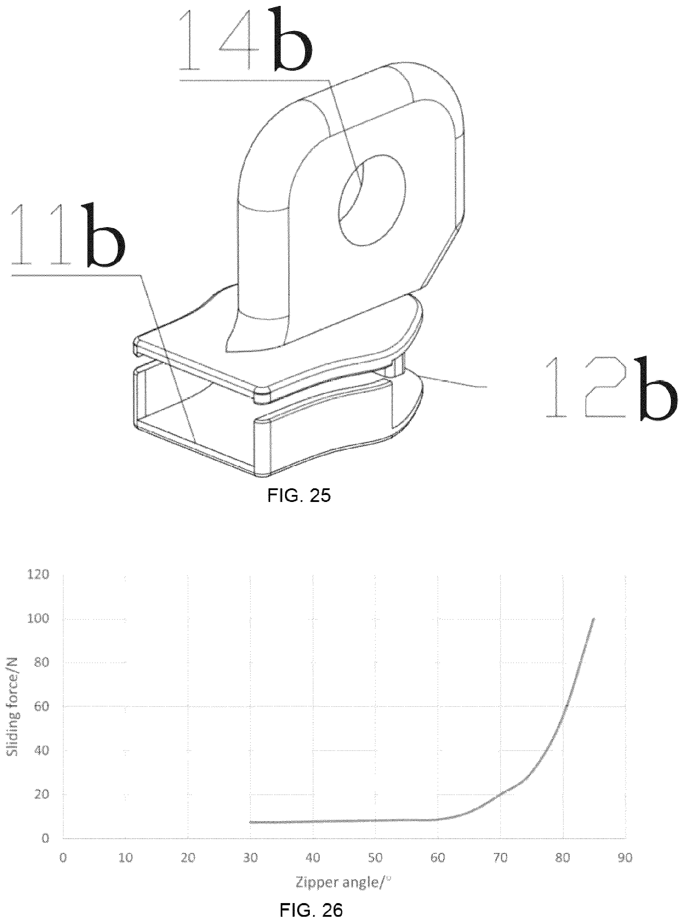

Referring to FIG. 25 and FIG. 26, Differing from Embodiment 1is the structure connecting the zipper guiding block 3b and the zipper head 1b. A first fixing hole 37b is set above the guiding bump 30b, and a second fixing hole 14b connected with the first fixing hole 37b is set at the upper end of the zipper head 1b, and a fixing screw 38b is set between the first fixing hole 37b and the second fixing hole 14b, and the fixing screw 38b is threaded connected respectively to the first fixing hole 37b and the second fixing hole 14b.

Although the embodiments of the present disclosure are disclosed as above, they are not used to limit the present disclosure. Therefore, any amendments, equivalent changes and modifications made to the above embodiments according to the essence of the present disclosure without departing from the proposal of the present disclosure fall within the scope of protection defined in the claims of the present disclosure.

## Claims

1. A zipper structure for a seat slide rail for preventing foreign matters from falling into the rail, comprising an upper rail (1) and a lower rail (2), and the upper rail (1) and the lower rail (2) being in sliding fit, and the upper rail (1) being provided at each of both ends with a zipper head (31) which is movably connected to the upper rail (1), and the lower rail (2) being provided with two dustproof rubber covers (22) fixed at an upper end, and the two dustproof rubber covers (22) being set respectively at both sides of the lower rail (2), and a sewn elastic cloth (32) being set between the dustproof rubber cover (22) and the lower rail (2), and the sewn elastic cloth (32) being fixedly connected to the dustproof rubber cover (22) or the lower rail (2) on one side, and being set with zipper chain teeth (33) on the other side, and two zipper chain teeth (33) are respectively connected with the zipper head (31), and when the zipper head slides, the zipper chain teeth (33) are interlocked with each other or separated from each other.

2. The zipper structure according to claim 1, wherein a steel wire (34) is fixedly connected with the sewn elastic cloth (32) and set on one side of which the sewn elastic cloth (32) connected with the dustproof rubber cover (22), and the sewn elastic cloth (32) is fixedly connected with the dustproof rubber cover (22) through the steel wire (34).

3. The zipper structure according to claim 2, wherein the dustproof rubber cover (22) is provided with a buckle cover (35) which is shaped to cooperate with an inner side thereof, and the steel wire (34) is pressed between the dustproof rubber cover (22) and the buckle cover (35).

4. The zipper structure according to claim 1, wherein a fixing aid part (36) is fixedly set on one side of which the sewn elastic cloth (32) is connected with the dustproof rubber cover (22), and the fixing aid part (36) has a longitudinal cross section in a shape of a wide upper part and a narrower lower part from top to bottom, and the dustproof rubber cover (22) is provided with a fixing groove (37) corresponding to the fixing aid part (36) in a male and female fit.

5. The zipper structure according to claim 1, wherein the upper rail (1) is provided with zipper sliders (12) respectively fixedly connected at each of both ends, and the zipper slider (12) is rotationally connected with the zipper head (31) by a vibration-dampening screw (13), and the vibration-dampening screw (13) connects an upper end of the zipper slider (12) and the zipper head (31) in a longitudinal direction, and the vibration-dampening screw (13) is fixedly connected to the zipper slider (12) and is rotationally connected to the zipper head (31).

6. The zipper structure according to claim 1, wherein the upper rail (1) is provided with zipper sliders (12) respectively fixedly connected to it at each of both ends, and the zipper slider (12) is rotationally connected with the zipper head (31) by a vibration-dampening screw (13), and the vibration-dampening screw (13) connects an upper end of the zipper slider (12) and the zipper head (31) in a horizontal direction, and the vibration-dampening screw (13) is fixedly connected to the zipper slider (12) and the zipper head (31).

7. The zipper structure according to claim 1, wherein the upper rail (1) is set with U-shaped side grooves (11) on both sides.

8. The zipper structure according to claim 7, wherein the U-shaped side groove (11) is provided with a pulley underneath.

9. A zipper structure for a seat slide rail, comprising a zipper head (1a) and zipper chain teeth (2a), and two zipper chain teeth (2a) passing through inside of the zipper head (1a), and the zipper structure further comprising a zipper slider (3a) and an upper rail (4a), and the zipper slider (3a) being connected to the zipper head (1a), and the zipper slider (3a) comprising a guiding portion (32a) and a sliding portion (31a), and the guiding portion (32a) and sliding portion (31a) forming a step from top to bottom, and the guiding portion (32a) being provided with guiding surfaces (321a) extending gradually outwardly from front to rear on both sides respectively, and two zipper sliders (3a) being fixedly connected to each of both ends of the upper rail (4a) respectively, and a connecting area between the guiding surface (321a) and the upper rail (4a) being located at outer side of the upper rail (4a), and the zipper head (1a) comprising a separating end (12a), and the two zipper chain teeth (2a) passing through the separating end (12a) and then respectively abutting against their corresponding guiding surfaces (321a).

10. The zipper structure according to claim 9, wherein an angle between a surface of the guiding surface (321a) and a horizontal plane gradually increases from front to rear, and the angle between the rear end of the guiding surface (321a) and the horizontal plane is not greater than 90°.

11. The zipper structure according to claim 9, wherein a guiding bump (33a) is provided between two guiding surfaces (321a) abutting against the separating end (12a), and the zipper chain teeth (2a) gradually extend outwardly along the guiding bumps (33a) and the guiding surfaces (321a) in turn.

12. The zipper structure according to claim 11, wherein the guiding surface (321a) extends outwardly from top to bottom, and the guiding portion (32a) is provided with a guiding step (322a) being set above the guiding surface (321a), and a step line (323a) is formed between the guiding step (322a) and the guiding surface (321a), and two extension lines of the step lines (323a) and front ends of the guiding bump (33a) form an angle of not more than 60°.

13. The zipper structure according to claim 12, wherein the plane in which the separating end (12a) is located is not higher than the plane in which the step line (323a) is located.

14. The zipper structure according to claim 9, wherein the guiding bump (33a) is provided with a fixing groove (34a) on rear side of the guiding bump (33a), and the fixing groove (34a) is set with a fixing hole an adjusting screw (35a) threadedly connected thereto at the bottom of the fixing groove (34a), and a connecting member (13a) rotationally connected with the adjusting screw (35a) is set fixedly at the upper end of the zipper head (1a), and a gap is provided between two sides of the connecting member (13a) and the two sides of the fixing groove (34a) respectively.

15. The zipper structure according to claim 9, wherein the sliding portion (31a) is provided with a sliding space allowing an external screw rod (5a) to pass through.

16. The zipper structure according to claim 9, wherein the zipper slider (3a) has a smooth surface.

17. The zipper structure according to claim 9, wherein the zipper slider (3a) is of an axisymmetric structure.

18. The zipper structure according to claim 9, wherein rear end of the zipper slider (3a) is fixedly sleeved connected to the upper rail (4a).

19. A zipper structure for facilitating interlocking for a seat slide rail, comprising a zipper head (1b), zipper chain teeth (2b) and an upper rail (4b), and two zipper chain teeth (2b) passing through inside of the zipper head (1b), two zipper heads (1b) respectively being set at each of both ends of the upper rail (4b), and the zipper head (1b) comprising a separating end (12b) and an interlocking end (11b), and the zipper structure further comprising a zipper guiding block (3b), and the zipper guiding block (3b) being connected to the zipper head (1b) at one end and being fixedly connected to the upper rail (4b) at the other end, and the zipper guiding block (3b) being provided with a guiding bump (30b) at a front end of the zipper guiding block (3b) abutting against the separating end (12b), and the zipper guiding block (3b) being provided with a guiding step (33b) from top to bottom, a guiding sliding surface (32b), and a sliding step (31b), two guiding steps (33b) and two guiding sliding surfaces (32b) being provided on each side of the zipper guiding block (3b), and the guiding bumps (30b) being located in a plane coinciding with a plane in which the guiding sliding surfaces (32b) are located, and the guiding sliding surfaces (32b) extending outwardly from the top to the bottom, and a connecting area between the guiding step (33b) and guiding sliding surface (32b) forming a guiding line (321b), and extension lines of two guiding lines (321b) and the guiding bump (30b) forming an angle of not more than 60°.

20. The zipper structure according to claim 19, wherein an angle between a surface of the guiding sliding surface (32b) and a horizontal plane gradually increases from front to rear, and the angle between the rear end of the guiding sliding surface (32b) and the horizontal plane is not greater than 90°.

21. The zipper structure according to claim 19, wherein an angle between a surface of the guiding step (33b) and aa horizontal plane is smaller than an angle between the surface of the guiding sliding surface (32b) and the horizontal plane.

22. The zipper structure according to claim 19, wherein the zipper guiding block (3b) is of an axisymmetric three-dimensional structure, and the guiding bump (30b) is provided between the two guiding sliding surfaces (32b), and each of the two zipper chain teeth (2b) passes along the guiding sliding surfaces (32b) and then through the guiding bump (30b).

23. The zipper structure according to claim 19, wherein the guiding sliding surface (32b) extends outwardly from front to rear.

24. The zipper structure according to claim 19, wherein a first fixing hole (37b) is set above the guiding bump (30b), and a second fixing hole (14b) connected with the first fixing hole (37b) is set at the upper end of the zipper head (1b), and a fixing screw (38b) is set between the first fixing hole (37b) and the second fixing hole (14b), and the fixing screw (38b) is threadedly connected respectively to the first fixing hole (37b) and the second fixing hole (14b).

25. The zipper structure according to claim 19, wherein the guiding bump (30b) is provided with a fixing groove (34b) on rear side of the guiding bump (30b), and the fixing groove (34b) is set with a fixing hole and adjusting screw (35b) threadedly connected thereto at the bottom of the fixing groove (34b), and a connecting member (13b) rotationally connected with the adjusting screw (35b) is set fixedly at the upper end of the zipper head (1b), and a gap is provided between two sides of the connecting member (13b) and the two sides of the fixing groove (34b) respectively.

26. The zipper structure according to claim 19, wherein the sliding step (31b) is provided with a sliding space allowing an external screw rod (5a) to pass through.

27. The zipper structure according to claim 19, wherein a distance between the ends of two guiding lines (321b) is greater than a width of the upper rail (4b).

28. The zipper structure according to claim 19, wherein the guiding sliding surface (32b) has a smooth surface.
